Europäisches Patentamt

European Patent Office

Office européen des brevets

(19)

(11) Publication number: **0 383 410**
**A1**

# EUROPEAN PATENT APPLICATION

(12)

(21) Application number: 90200365.6

(51) Int. Cl.5: **A01G 5/00**

(22) Date of filing: **19.02.90**

(30) Priority: **17.02.89 NL 8900392**

(43) Date of publication of application:
**22.08.90 Bulletin 90/34**

(84) Designated Contracting States:
**AT BE CH DE FR GB LI LU NL**

(71) Applicant: **Koenders, Robèr Hermanus Wilhelmus**
**Meulenbeltlaan 26**
**NL-7602 XH Almelo(NL)**

(72) Inventor: **Koenders, Robèr Hermanus Wilhelmus**
**Meulenbeltlaan 26**
**NL-7602 XH Almelo(NL)**

(74) Representative: **Rhijnsburger, Johan Gerard**
**De Lange Krag 36**
**NL-2811 RX Reeuwijk(NL)**

(54) **Process for defoliating plant stems and apparatus therefor.**

(57) Process for defoliating plant stems (1) wherein the stems are transported through a first roller pair (2) provided with brushes by engagement of the brushes and thereafter the stems after passage through the clearance between the rollers are exposed to the action of a second pair of rollers (3) directly placed behind the first pair of rollers, rotating opposite to the transport direction, provided with brushes. The brush elements of both roller pairs overlap to a certain extent, the brushes of the second roller pair mutually having such a distance that the leaves folded flat in the first action are able to straighten themselves before they are exposed to the action of the second roller pair. An apparatus for carrying out this process is indicated in the figure.

FIG 1

## Process for defoliating plant stems and apparatus therefor

The invention relates to a process for defoliating plant stems and an apparatus therefor. Up to now plant stems of decorative flowers, like carnation, chrysanthemum, roses, etc. are defoliated by hand. There is an apparent need for a faster method both to save time as well as for a better defoliating effect. Defoliating by hand often leaves the very small leaves which when the stems are placed in a container with water quickly leads to deterioration of the water.

It is an object of the present invention to provide a semi-automatic process and apparatus for defoliating plant stems with which the advantages aimed at, i.e. saving of time and better quality are reached.

Thus the invention provides a process for semi-automatic defoliating of plant stems which is characterized in that the plant stems possessing leaves are transported through the nip of a first rotating roller pair provided with brushes by engaging of the brushes and then, after they have passed this nip are exposed to the action of a second pair of rollers directly placed behind the first pair of rollers, rotating opposite to the transport direction, provided with brushes, whereafter they are again withdrawn. This process is most advantageously carried out with bushes of stems at the same time whereby great time savings are reached. It is assumed that during the reciprocal movement given to the bushes of stems the leaves of the stems in the first passage are brought into a folded condition, against their natural growth position, if they are nor removed as concerns small leaves, whereby when the leaves after their first passage tend to recover to their natural growing position they are removed by the brushes of the second roller pair, which rotate opposite to the transport direction. Thus the stems preferably are introduced in such a direction that this can take place; in practice this coincides with the direction away from the flower or against the natural growth direction.

It is to be understood that the length of the brushes, the rotation velocity of the rollers as well as the position and shape of the brushes can be adjusted to obtain the best possible results. At the first roller pair the brushes are positioned such that the tips of the brushes of the upper roller and lower roller overlap each other to some extent, although not so that the stems would not be able to pass. For usual stems this overlap is of the order of centimeters. In view of this the brushes are built such that they possess a certain resiliency apart from a sufficient strength and are able to bend under the influence of forces.

Thus on the one hand the stems are transported without being damaged (resiliency of the brushes) and an the other hand relatively small leaves are already stripped off. They should further be moisture resistent an equally not weakened by the presence of water or moisture.

The second pair of rollers is suitably arranged such that the distance between the upper and lower rollers is so large that there no action of the brushes occurs. Thus one reaches that the leaves after their first passage through the first roller pair where they are flattened can easily straighten themselves and as a consequence thereof can be better removed by the brushes of the second roller pair in cooperation with the brushes of the first roller pair. In connection therewith the second roller pair tends to be smaller in dimensions than the first roller pair, although this per se is not imperative provided there is enough clearance. The leaves removing action is exerted by the second roller pair, directly places against the first roller pair, in cooperation therewith.

Preferably the two pairs of rollers are arranged such that a small overlap exists between the ends of both brushes, e.g. of the order of several centimeters, naturally dependent of the stems treated,such as is present between at the upper and lower roller of the first roller pair. This greatly furthers the removal of the leaves.

The rotation velocities can be adjusted as desired, dependent on the size and type of the stems to be treated, the first or the second pair of rollers rotating faster as required. Generally both roller pairs have the same but opposite rotation velocity to ensure a smooth course of defoliation. These parameters can be determined for a particular stem to be defoliated by a few experiments.

The brushes on both roller pairs need not be identical. The elements can also be positioned in another way. As already mentioned the brushes consist of strong resilient elements and materials which are inert to water. Accordingly elements and materials can be used which satisfy these conditions, of which in particular plastics are suitable, like e.g. PVC, polystyrene, nylon, etc., but also metals, provided they have enough resiliency. The elements of the brushes may have the shape of tough hairs but they may also consist of pins and threads. They are generally densely planted in an regular way the core of the roller. It is also possible to arrange the elements of the brushes on the first roller pair in this way e.g. helically because for this pair of rollers mainly a conveying movement is necessary, but this does not afford additional advantages.

For the second pair the elements of the brushes preferably are placed over the total surface regularly although another arrangement, like a.o. a helical form, is possible. Preferably the separate elements of the brushes will have an equal height although small deviations are acceptable. It is to be understood that the length, cross section and hardness of the elements of the brushes, and thus of the brushes overall can be adapted to the product to be treated. Furthermore also the position of the roller pairs preferably is adjustable e.g. the clearance can be adjusted by making one of the rollers adjustable in respect of the cooperating roller as well as in respect of the other roller pair, which allows the mutual distance of the two roller pairs to be modified. For such an arrangement flat pulleys are suitable as a coupling mechanisme but also gears are possible. The term roller pair also embraces pairs of cilinders with such a width that at the same time more persons beside each other are able to work. However it is also possible to connect several roller pairs beside each other at a continuing driving shaft.

The invention also provides a semi-automatic defoliating apparatus, provided with a driving mechanism, which is characterized in that it comprises two roller pairs provided with brushes, which are driven in opposite direction by the driving mechanism, which pairs are directly arranged one behind the other and are provided with leaves removing means, in the form of brushes consisting of brushing elements, which roller pairs are positioned so that the first roller pair substantially functions as a conveying roller and the second pair as a leaves removing roller.

In a suitable embodiment the two roller pairs are directly positioned against each other and the distance between the upper roller and the lower roller of the second roller pair is such that the leaves flattened by the brushes of the first roller pair , after passage of the stems, are able to straighten themselves in the intermediate space and then be engaged by the brushes of the second roller pair. The driving means of the apparatus are so arranged that both roller pairs can be driven independently by gears, pulleys and V-wires. By these driving means several roller pairs can be driven beside each other. Also roller cilinders can be driven and with such dimensions that several persons standing besides each other simultaneously are able to defoliate stems with leaves. It is possible to use more than two roller pairs behind each other but this gives no particular advantages.

The rotation velocity of the rollers must be sufficient to achieve the defoliating effect, which naturally depends on the plant stem to be treated and the stiffness of the brushes. The rotation velocity may vary within the broad range of 100 to 1000 revolutions per minute, values of about 400 to 800 revolutions per minute being suitable. It is to be understood further that the dimensions of the rollers are adjusted to the dimensions of the stems and generally are in the order of 5 cm to 30 cm diameter and mostly of the order of 8-25 cm, including the elements of the brushes. These dimensions are illustrative only and one will determine the proper dimensions in practice by a few experiments, which also holds for the revolution number. For the inventive effect the dimensions of the rollers are not of essential importance, but they will not be chosen larger than necessary.

The apparatus is generally suitable for defoliating a variety of plant stems, especially stems having flowers for the florist, like e.g. tulips, roses, freesia's, chrysanthemum, etc. In view of the adjustability of the various parameters discussed as well as the rollers themselves it is possible to treat plant stems of which the stems are harder or the leaves are more firmly atteched or of which have the leaves a somewhat deviating form.

In the drawing an ambodiment of the apparatus according to the invention is further explained. In the only figure a schematic selevation is given of the two roller pairs used in the apparatus, wherein the course of a plant stem is illustrated. It is to be understood that in practice one uses bushes of stems. In this figure plant stem 1 provided with leaves is passed from the left hand side of the drawing through roller pairs 2 en 3, as indicated bij arrow 1a. Roller pair 2 consists of two cores 4a and 4b, which both are provided with brushes 5a and 5b. The elements of the brushes are implanted in the (solid) cores 4a and 4b. The contour of the brushes is schematically shown by the circular lines 6a and 6b. The cores 4a and 4b are rotating in the direction of the respective arrows 7a and 7b as a consequence of which the plant stem 1 is transported by the roller pair. This rotation is supplied by central driving axes (not shown), which through a transmission mechanism are connected to a driving motor. The elements of the brushes on upper and lower roller overlap over a small distance, but with a view to the resiliency of the elements of the brushes the transport of the plant stem 1 is not inhibited. This overlap is necessary for the treatment, i.e. flattening of the larger leaves and removing of the smaller ones. Behind the first roller pair a second roller pair 3 is arranged, with cores 8a and 8b where upon brushes 9a and 9b are fixed. The contour line of the elements of the brushes is here also schematically shown by the circular lines 10a and 10b. Cores 8a and 8b respectively rotate in the direction of the arrows 11a and 11b, thus opposite to the transport rotation direction of roller pair 2.

At 12 schematically is indicated that the plant leaves straighten themselves after passage through the first roller pair in the clearance which is left between the upper and lower roller of the second roller pair. After having passed through the first roller pair and having arrived in the spacing of the second roller pair the plant stems are retracted, as indicated by arrow 1b, whereby the leaves before they again enter the clearance of the first roller pair, in erected condition, are engaged by the brushes of the upper and lower roller of the second roller pair and removed. From this arrangement it follows that small leaves which are on the stems are not resistant against the engaging forces of the elements of the brushes of the first roller pair and thus are already removed. One thus reaches mainly by the first roller pair with overlap a removal of the small leaves and of the greater leaves by the second roller pair.

In thus appears that after this treatment of the reciprocating movement of the stems with leaves the leaves substantially are removed. The figure illustrates that in the preferred embodiment the rollers including the brushes of the roller pair 3 are smaller in dimension than those of the other roller pair. It is apparent that as a consequence thereof the space present behind the first roller pair is better utilized.

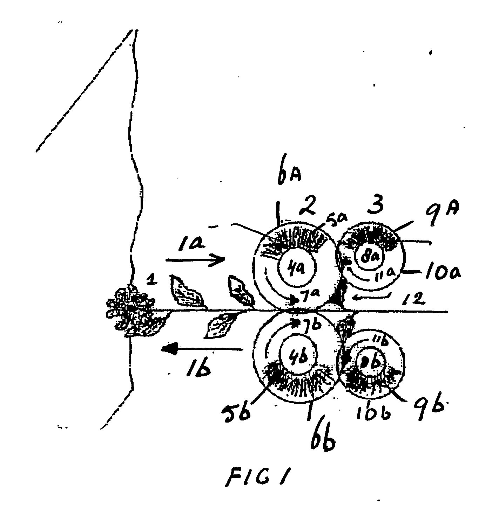

In the apparatus shown in figure 1 stems of carnations were in the way as described defoliated semi-automatically.

The rollers of the first roller pair had a diameter of 11 cm, consisting of helically placed brushes on a core of 5 cm. The brushes of the upper and lower roller had an overlap of 2 cm. The rollers of the second roller pair had a diameter of 9 cm with the brushes regularly fixed on a similar core of 5 cm. The distance between the two rollers of the second roller pair amounted to 4 cm. The overlap between the elements of the brushes of the first and second roller pair was about 2 cm. In the cores of both roller pairs a driving axis of about 20 mm was present coupled to an electromotor. The bushes of carnations were fed through the first roller pair such that the entire stem up to the flower was treated. Thereafter the bushes were withdrawn. It appeared that substantially all leaves were removed. In comparison with manual defoliation it was found that the semi-automatic treatment was about 10-20 times faster. The elements of the brushes consisted of inert plastic, i.e. polystyrene, with sufficient resiliency to allow bending under the working pressures. These elements were implanted in a hollow tube of plastic or another material which was pushed on the core of the rollers. Thus it is possible to use different brushes. It is of course also possible to use integral brushes.

The leaves ripped off are removed after each passage or they can be removed automatically by a deflector plate. The rotation velocity of the two rollers was similar and amounted to 750 revolutions per minute.

## Claims

1. Process for defoliating plant stems, characterized in that plant stems possessing leaves are transported through a first roller pair provided with brushes by engaging of the brushes and then after they have passed this clearance are exposed to the action of a second pair of rollers directly placed behind the first pair of rollers, rotating opposite to the transport direction, provided with brushes, whereafter they are again withdrawn.

2. Process according to claim 1, characterized in that both roller pairs are rotating with the same but opposite velocity.

3. Process according to claims 1 and 2, characterized in that the brushes of the first roller pair are overlapping for engaging the stems and the brushes of the second roller pair mutually have such a distance that there is enough space that the leaves folded flat during the first passage are able to straighten themselves before they are exposed to the action of the second roller pair.

4. Process according to claims 1-3, characterized in that the second roller pair is directly placed behind the first roller pair in such a way that the ends of the elements of the brushes of the two roller pairs are slightly overlapping each other and exert a removing action on the leaves.

5. Apparatus for carrying out the process according to claims 1-4, provided with driving means, characterized in that it comprises two cooperating roller pairs, which roller pairs are provided with leaves removal means in the form of brushes and which are arranged in such a way that they rotate in opposite directions, the first roller pair rotating in the transport direction of the leaves.

6. Apparatus according to claim 5, characterized that the first roller pair is provided with elements of brushes such that the ends of the elements of the brushes slighly overlap each other but do not hinder the passage of the plant stems.

7. Apparatus according to claims 5-6, characterized in that the second roller pair is so arranged that there is sufficient distance between the upper roller and the lower roller that the leaves of the stems after they have been flattened by the first roller pair can erect themselves.

8. Apparatus according to claims 5-7, characterized in that the two roller pairs are placed against each other in such a way that the ends of the elements of the brushes are overlapping each other laterally.

9. Apparatus according to claims 5-8, characterized in that the roller pairs are joined to roller cilinders with sufficient width to allow several persons to work therewith.

10. Apparatus according to claims 5-8, characterized in that several roller pairs are placed besides each other and are driven by a common axis.

FIG 1

EP 0 383 410 A1

## DOCUMENTS CONSIDERED TO BE RELEVANT

EP 90200365.6

| Category | Citation of document with indication, where appropriate, of relevant passages | Relevant to claim | CLASSIFICATION OF THE APPLICATION (Int. Cl⁵) |
|---|---|---|---|
| A | FR - A - 2 408 296 (NEDELLE) * Totality * -- | 1,5,6, 10 | A 01 G 5/00 |
| A | DE - A - 1 809 999 (FÄHRENKÄMPER & CO) * Totality * ---- | 1,5,6 | |

TECHNICAL FIELDS SEARCHED (Int. Cl⁵)

A 01 G
A 47 J

The present search report has been drawn up for all claims

| Place of search | Date of completion of the search | Examiner |
|---|---|---|
| VIENNA | 27-04-1990 | FESSLER |